# EUROPEAN PATENT SPECIFICATION

(11) **EP 0 797 973 B1**
(45) Date of publication and mention of the grant of the patent: **17.12.2003**
(21) Application number: 97200864.3
(22) Date of filing: 21.03.1997
(51) Int. Cl.: A61H 33/02, F16K 15/14

(54) **Valve for venting the air from the intake pipe of an intake orificie for hydro-massage**
Enlüftungsventil für die Zufuhrleitung einer Zufuhröffnung einer Hydromassagevorrichtung
Soupape de ventilation d'une conduit d'admission pour l'orifice d'admission d'un appareil d'hydromassage

(30) Priority: 25.03.1996 IT TV960018 U
(43) Date of publication of application: 01.10.1997
(73) Proprietor: Jacuzzi Europe Spa, 33098 Valvasone (Pordenone) (IT)
(72) Inventor: Furlan, Livio, 33170 Pordenone (IT)
(74) Representative: Agostini, Agostino

(56) References cited:
- US-A- 3 580 247
- US-A- 4 054 152
- US-A- 4 275 713

## Description

The present invention relates to a valve for venting the air from the intake pipe of an intake orifice for hydro-massage.

More specifically, the invention relates to a valve for venting, which comprises a valve body inside which there is disposed at least one diaphragm closure member, said valve body, being connected on one side to the intake pipe of the hydro-massage system, and on the other side communicates with the atmosphere.

It is known that the water intake circuits in a system for hydro-massage are closed circuits, and in their interior, before intake of the water, there is always present a quantity of air which has entered the intake circuit both through the intake and delivery orifices.

When the hydro-massage system is activated, and thus the corresponding intake pump is put into operation, it is known that a given quantity of water begins to be introduced in the intake pipe of the pump, but in order to permit priming of the pump, this flow of water must reach the interior of the pump, since otherwise the pump would continue to run in a dry condition, with the possibility of damage to its components.

The difficulties with which the aforementioned flow of water manages to reach the interior of the pump is caused by the presence of air in the intake circuit. The air present in this circuit generates significant resistance to the advance of the water, which prolongs the time taken for the water to reach the pump and for the latter to be primed.

It is also known that, although gradually, the air present in the intake circuit is vented to the exterior of the circuit, by means of the intake or the delivery orifices, but this action involves long periods of time, since the venting does not take place continuously, but with discontinuous emergence into the atmosphere of air bubbles, which inter alia encounter substantial resistance in being conveyed outside the circuit in question.

Also known from US-A-3 580 247 is a valve that enables air to be vented from a manifold mounted on a wall of a hydro-massage tub so as to allow a safe operation of the circulation pump. This valve needs to be manually operated by an user through depression of a pushbutton.

A valve which constitutes the subject of the present invention has now been designed, for venting the air from the intake pipe of a intake orifice for hydro- massage, which is advantageously suitable for solving the above-described problem and operates without an intervention by the user.

One of the main objects of the present invention thus consists of providing a valve for venting which permits bleeding of the air outside the intake circuit in a short period of time, thus permitting sufficiently fast priming of the intake pump and therefore activation of the hydro-massage system in a short period of time.

Another object of the invention is to provide a valve for venting which bleeds the air from the intake circuit by the action solely of the limited pressure which occurs in this circuit owing to the initial intake of the water in the intake pipe. It is important to emphasise the fact that the intake pump is thus not subject to wear, caused by long periods necessary for it to go into operation.

The object of the present invention is thus a valve for venting the air from the intake pipe of an intake orifice for hydro-massage, according to the appended claim 1.

The features and advantages of the valve for venting according to the present invention will become apparent from the following detailed description of a non-limiting embodiment, provided with reference to the attached drawings in which:
- figure 1 is a schematic general view of the part of the intake circuit in which the valve for venting according to the present invention is installed; and
- figure 2 is an enlarged view in longitudinal cross-section of the valve for venting only, according to the invention.

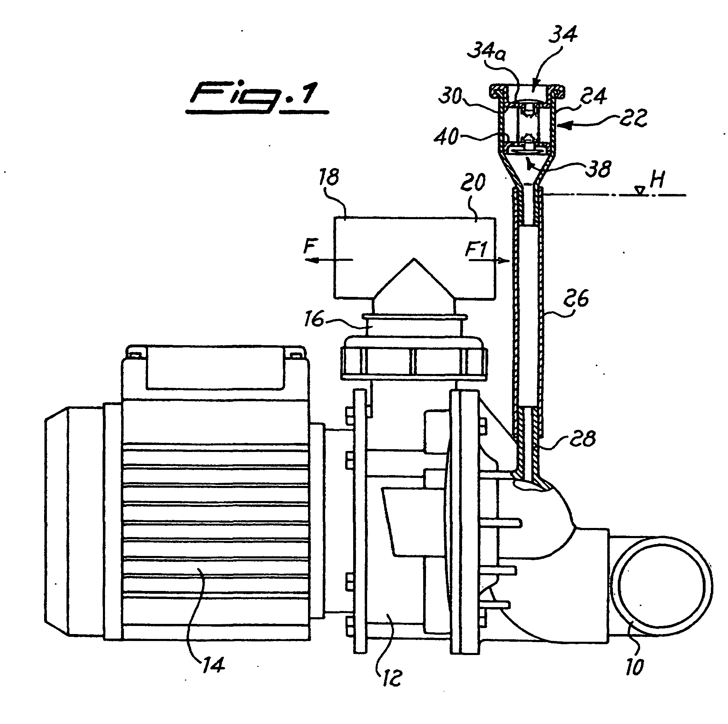

Reference is made firstly to figure 1, in order to describe briefly the part of the intake circuit in which the valve according to the present invention is installed, since this part is generally known according to the state of the art for hydro-massage systems. Thus only the components of this part which are essential for understanding of the present invention are indicated and marked with reference numbers.

10 indicates as a whole the intake pipe of the intake circuit of the hydro-massage system, which is connected on one side to the intake orifice, not shown, which communicates with the interior of the tub (also not shown), and on the other side, to an intake pump generally indicated as 12. The intake pump 12 is connected in any known manner, not shown, to a control motor 14 which drives it.

The pump 12 is provided with a pipe indicated 16 for distribution of the water, from which there extends a branch of two pipes 18, 20, by means of which the water is conveyed to the hydromassage orifices, as shown schematically by the arrows F and F1 in figure 1.

The connection of the pipes 18, 20 to the hydro- massage orifices is not shown, since it is known. According to one of the innovative features of the present invention, there is attached to the intake pipe 10 a valve for venting air into the atmosphere, which is generally indicated by the reference 22. This valve 22 comprises a valve body 24 which is connected by means of a connection pipe 26 to a sleeve portion 28 which communicates with the interior of the intake pipe 10 and is integral with the latter.

According to one of the innovative features of the present invention, as can be seen also in figure 1, the valve 22 for venting, and more specifically its connection to the intake pipe 10 is disposed upstream of the pump 12, according to the direction in which the latter admits the water..

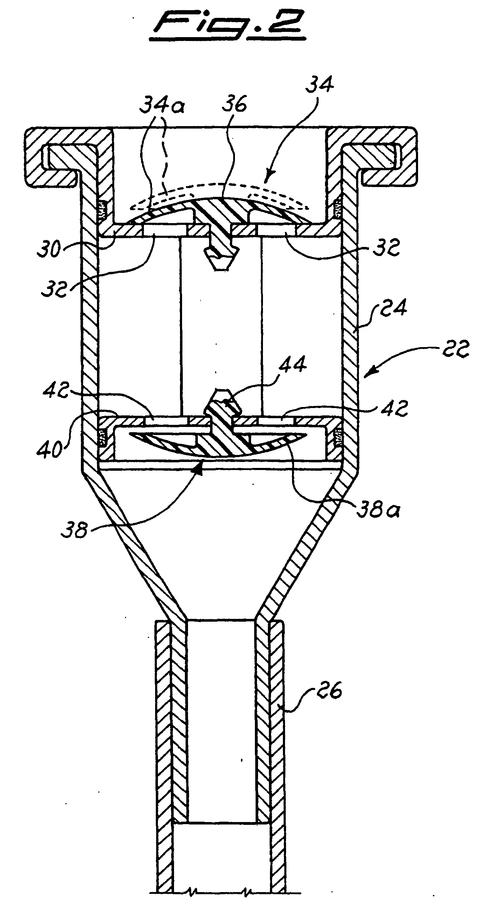

The form of the valve 22 for venting is now described in detail, with reference also to figure 2. Substantially in the upper part of the valve body 24, the valve in question comprises a stationary wall 30 which is provided with a series of holes 32, disposed for example equidistantly around a circumference, which, when the valve 22 is open, permit venting of the air to the exterior of the latter, in particular into the atmosphere with which the valve 22 communicates at its upper end.

With the stationary wall 30 there is associated a diaphragm closure member 34, which can assume two operative positions, the first of which, corresponding to closing of the valve, is represented by a continuous line in figure 2, whereas the second, corresponding to opening of the valve, is that shown by the broken line, relative only to the actual diaphragm indicated 34a.

The diaphragm closure member 34, and more specifically its diaphragm 34a, has a substantially convex shape in the direction of the stationary wall 30, such that this diaphragm 34a engages with this wall only with the contour of the diaphragm, around the area where the holes 32 are provided.

The diaphragm 34a of the closure member 34 is provided on the side facing the wall 30 with a substantially central projection 36, the specific shape of which permits displacements of the closure member 34 along the longitudinal axis of the valve body 24.

More specifically, this shaped projection 36 has a base portion which extends from the diaphragm 34a, which can for example be substantially cylindrical, extending in an intermediate portion, which for example is also substantially cylindrical, and can slide freely within a central passage of the wall 30. This intermediate portion ends at the end of the projection 36, which is enlarged for the reasons which will be better understood hereinafter in the present description.

As can be seen also in particular in figure 2, the initial, end portion of the projection 36 of the diaphragm closure member 34 has a width greater than that of the passage inside which the intermediate portion of the projection 36 can be displaced. By this means this initial, end portion of the projection 36 constitutes a stop for the displacements of the diaphragm closure member 34 from its closing position to its opening position and vice versa.

It should be noted that raising of the diaphragm 34a of the diaphragm closure member 34 does not require a particularly intensive thrust action, both because this closure member is made of a material which makes it particularly light, such as rubber, a plastics material or the like, and because sliding of the intermediate portion of the projection 36 takes place with particularly low friction. In this respect the flow of air which rises from the base, through the pipe 26 inside the valve body 24, is sufficient to raise the closure member 34. This flow of air in particular has particularly low intensity, such that the pressure generated has a correspondingly low value. This is derived in particular from the fact that this rising flow of air is generated simply by the action of the water which enters the intake pipe 10, and cannot yet reach the interior of the pump 12, but is sufficient to thrust the air present in the pipes of the intake circuit towards the valve 22.

The movement of lowering the diaphragm 34a of the closure member 34 to the position of closing of the valve 22, as well as taking place very quickly, is caused by a very intensive thrust constituted in particular by the action of intake or depression created by the pump 12, which has been able to be primed, on completion of emergence of the air through the valve 22.

The action of intake of the pump 12 is particularly intensive because it must guarantee circulation of the water inside all of the intake circuit of the hydro- massage system. Consequently the diaphragm 34a is maintained firmly and stably against the wall 30, closing the holes 32 safety and reliably, and thus preventing any intake of air in the intake circuit which would detract from satisfactory operation of the pump 12. The speed with which the valve 22 is closed and the stability of the positioning of the diaphragm 34a in this condition, also prevent the slightest quantity of air from entering the valve 22 and therefore the water intake circuit. Again with particular reference to Figure 2, but consulting also figure 1, it can be seen that inside the valve body 24, there are associated with the diaphragm closure member 34 means for preventing water from the intake circuit of the valve body 24 from flowing back inside the latter. This situation generally occurs when the pump 12 is stopped in order to interrupt the hydro-massage. This operation leads to a generally fast return of the water into the pipe 26, which is thus quickly filled with water, whereas previously, with hydro-massage in progress, this pipe 26 had been empty. The water rises in the pipe 26 in particular in accordance with the principle of communicating vessels, since, as can be seen in particular in figure 1, the delivery pipes 18 and 20 which distribute water to the hydro-massage orifices, are substantially at the same level as the upper end of this pipe 26. It is clear that when the action of intake of the pump 12 is lacking, the water present in the intake circuit tends to fill the pipe 26. For safety reasons, and in the first instance to prevent the water which fills the pipe 26 from going inside the body 24 of the valve 22, the length of the pipe 26 is such that the valve 22 is above the maximum filling level of the water in the tub, which is shown schematically by the line H in figure 1. It is however clear that even having taken this precautionary measure, rising of the water in the pipe 26 can be of particularly great speed and intensity, by this means making the water in the pipe 26 rise above the level H. In other words a water hammer effect could arise, which would force the water inside the body 24 of the valve 22 if means, which are described in detail hereinafter, were not provided to prevent this intake.

These means for stopping the flow of water from the pipe 26 inside the body 24 of the valve 22 comprise a second diaphragm closure member, the diaphragm 38a of which is disposed symmetrically and specularly in relation to the diaphragm 34a of the diaphragm closure member 34. More specifically the diaphragms 34a and 38a are respectively above and below the wall 30 and a stationary wall 40 with which this diaphragm 38a cooperates. The latter is provided with holes 42 which, during operating before priming of the pump 12, permit passage of the air towards the first diaphragm closure member 34.

The diaphragm 38a of the second diaphragm closure member 38 also has a suitably shaped substantially central projection which is substantially like that of the first diaphragm 34a, i.e. which has an enlarged initial end portion which can constitute a stop for translation of the membrane, and more particularly translation of its intermediate portion in a passage of the stationary wall 40. These stops correspond in particular to the positioning of the diaphragm 38a in the position shown in figure 2, corresponding to passage of the air, and a position not shown in which this diaphragm 38a engages with this wall 40 in order to close the passages or holes 42, and prevent the flow of water inside the chamber 24.

This is particularly important both because a flow of water towards the first diaphragm closure member 34 could cause encrustations on the latter, consequently giving rise to incorrect operation, and because this return flow of water would cause raising of the first diaphragm closure member 34 and spillage of water outside the valve 22 and therefore on the bathroom floor.

According to a further advantageous feature of the valve according to the present invention, in order to prevent closing of the holes 42 by the second diaphragm closure member 38 during passage of the air, this closure member 38 can simply be made slightly heavier, for example by fitting at least one washer on the initial, enlarged part of its projection 44, such that the flow of air which rises inside the valve body 24 is not such as to give rise to engagement of the second diaphragm closure member 38 with the wall 40.

From the above description it is apparent that both bleeding of the air initially present in the intake circuit, and the feature of preventing water from flowing back in the body 24 of the valve 22 are provided by the latter very simply and reliably. In addition, the structural simplicity of the valve according to the present invention means that it has a low production cost, and is therefore economically convenient.

A further advantage of the valve for venting according to the present invention consists in that it reduces considerably the time necessary for priming of the intake pump, such that altogether the hydro-massage system goes into operation quickly.

Finally it is clear that conceptually and structurally equivalent variants and / or modifications can be made to the valve for venting according to the present invention, without departing from the context of its protection.

For example the first closure member 34 can be stationary and its diaphragm 34a can be made of an easily deformable elastic material. In this case disengagement of the diaphragm 34a takes place by elastic deformation upwards, caused by the aforementioned flow of air which rises in the body 24 of the valve 22.

## Claims

1. Valve (22) for venting air from the intake pipe of an intake circuit for the water in a hydromassage system from the intake pipe of an intake circuit for the water in a hydromassage system comprising :
- a body (24) which is attched by means of a connection pipe (26) to the water intake pipe (10) of a intake pump (12) in a hydro-massage system and comprises in its upper part a wall (30) provided with holes (32) for bleeding the air into the atmosphere and
- a first closure member (34) having a diaphragm (34a) which can selectively assume a first position, which corresponds to opening of the valve (22), in which it is disengaged from the holes (32) of the wall (30) and a second position, corresponding to closing of the valve (22), in which it engages with the said wall (30),
**characterised in that**
- the diaphragm (34a) of the first closure member (34), assumes its first position owing to the action of the water entering into the intake pipe (10) so as to generate a flow of air which rises through the said connection pipe (26) in the valve body (24) and its second position owing to the action of the depression in the valve body (24) generated when the intake pump (12) has been primed,
- the valve (22) also comprises means (38) associated with this closure member (34) for preventing the water from flowing back into said connection pipe (26) in the event of interruption of operation of the hydro-massage system, and more particularly if when operation of the intake pump (12) is stopped.

2. Valve for venting air from the intake pipe of an intake circuit for the water in a hydromassage system according to claim 1, **characterised in that** the said first closure member (34) is disposed above the wall (30) provided with holes (32) for bleeding the air, and has a shaped projection (36) which faces downwards, the central portion of which can slide freely inside a passage of the said wall (30) which extends upwards and downwards as two enlarged portions which constitute the stops for movement of the closure member (34) between these two positions which correspond to opening and closing of the valve (22).

3. Valve for venting air from the intake pipe of an intake circuit for the water in a hydromassage system according to claim 1, **characterised in that** the diaphragm (34a) of the first closure member (34) has a substantially concave form on the side facing this wall (30) provided with holes (32) for bleeding the air.

4. Valve for venting air from the intake pipe of an intake circuit for the water in a hydromassage system according to claim 1, **characterised in that** the interface between the valve body (24) and the pipe (26) which connects the valve (22) to the intake pipe (10) is substantially at the same height as the delivery pipes (18, 20) distributing water to the hydro-massage orifices.

5. Valve for venting air from the intake pipe of an intake circuit for the water in a hydromassage system according to claim 1, **characterised in that** the interface between the valve body (24) and the pipe (26) which connects the valve (22) to the intake pipe (10) is substantially above the maximum filling level (H) of the water in the tub to which the hydromassage system is connected.

6. Valve for venting air from the intake pipe of an intake circuit for the water in a hydromassage system according to claim 1, **characterised in that** these means for preventing water from flowing back inside the said connection pipe (26) consist substantially of a second closure member (38) which is also associated with a second wall (40) in the lower part of the valve body (24) which is provided with holes (42) for passage of the air in the direction of the first closure member (34).

7. Valve for venting air from the intake pipe of an intake circuit for the water in a hydromassage system according to claim 26, **characterised in that** the diaphragm (38a) of this second closure member (38) is disposed below the said second wall (40) to which it is associated, symmetrically relative to the diaphragm (34a) of the first closure member (34).

8. Valve for venting air from the intake pipe of an intake circuit for the water in a hydromassage system according to claim 7, **characterised in that** the second closure member (38) can also assume two positions, in one of which it permits passage of the air through the holes (42) of the said second wall (40), whereas in the second position it engages with the lower surface of this wall (40) in order to prevent passage of water through these holes (42).

9. Valve for venting air from the intake pipe of an intake circuit for the water in a hydromassage system according to claims 8, **characterised in that** the diaphragm (38a) of this second closure member (38) is also provided with a substantially central projection (44) which faces upwards, and has two enlarged, end portions connected by a central portion which can slide in a passage of the said second wall (40), these enlarged portions constituting the stops for displacements of this diaphragm (38a) between the said two positions.

10. Valve for venting air from the intake pipe of an intake circuit for the water in a hydromassage system according to claim 1, **characterised in that** the first closure member (34) is stationary and its diaphragm (34a) consists of an elastic, easily deformable material such that it is disengaged from the wall (30) by elastic deformation upwards caused by the flow of air which rises in the body (24) of the valve (22).

## Patentansprüche

1. Ventil (22) zum Entlüften des Ansaugrohrs eines Ansaugkreises für Wasser in einem Hydromassagesystem, aufweisend:
- einen Körper (24), der mittels eines Verbindungsrohres (26) an dem Wasseransaugrohr (10) einer Ansaugpumpe (12) in einem Hydromassagesystem angebracht ist und der in seinem oberen Teil eine Wand (30) aufweist, die mit Löchern (32) versehen ist, um Luft in die Atmosphäre abzulassen, und
- ein erstes Verschließbauteil (34), das eine Membran (34a) besitzt, die wahlweise eine erste Position, die der Öffnung des Ventils (22) entspricht, in der sie von den Löchern (32) der Wand (30) außer Eingriff ist, und eine zweite Position, die dem Verschließen des Ventils (22) entspricht, in der sie mit der Wand (30) in Eingriff steht, einnehmen kann,
**dadurch gekennzeichnet, daß**
- die Membran (34a) des ersten Verschließbauteils (34) ihre erste Position infolge der Wirkung des Wassers, das in das Ansaugrohr (10) gelangt, einnimmt, so daß ein Luftstrom erzeugt wird, der durch das Verbindungsrohr (26) in den Ventilkörper (24) aufsteigt, und daß sie ihre zweite Position infolge der Wirkung des Herabdrückens in den Ventilkörper (24) einnimmt, was erzeugt wird, wenn die Ansaugpumpe (12) zum Ansaugen gebracht wird,
- das Ventil (22) ferner eine Vorrichtung (38) aufweist, die zu diesem Verschließbauteil (34) gehört, um zu verhindern, daß das Wasser zurück in das Verbindungsrohr (26) strömt, für den Fall einer Unterbrechung des Betriebs des Hydromassagesystems, und insbesondere, wenn der Betrieb der Ansaugpumpe (12) gestoppt wird.

2. Ventil zum Entlüften des Ansaugrohres eines Ansaugkreises für Wasser in einem Hydromassagesystem gemäß Anspruch 1, **dadurch gekennzeichnet, daß** das erste Verschließbauteil (34) oberhalb der Wand (30), die mit Löchern (32) zum Entlüften versehen ist, angeordnet ist und einen geformten Vorsprung (36) besitzt, der nach unten zeigt, wobei dessen Mittelabschnitt frei in einem Durchlaß der Wand (30) gleiten kann, der sich nach oben und nach unten in zwei vergrößerte Abschnitte erstreckt, die die Stoppositionen für die Bewegung des Verschließbauteils (34) zwischen diesen zwei Positionen, die dem Öffnen und dem Schließen des Ventils (22) entsprechen, bilden.

3. Ventil zum Entlüften des Ansaugrohres eines Ansaugkreises für Wasser in einem Hydromassagesystem gemäß Anspruch 1, **dadurch gekennzeichnet, daß** die Membran (34a) des ersten Verschließbauteils (34) im wesentlichen eine konkave Gestalt auf der Seite besitzt, die dieser Wand (30), die mit Löchern (32) zum Entlüften versehen ist, gegenüber liegt.

4. Ventil zum Entlüften des Ansaugrohres eines Ansaugkreises für Wasser in einem Hydromassagesystem gemäß Anspruch 1, **dadurch gekennzeichnet, daß** die Schnittstelle zwischen dem Ventilkörper (24) und dem Rohr (26), das das Ventil (22) mit dem Ansaugrohr (10) verbindet, im wesentlichen dieselbe Höhe wie die Förderrohre (18, 20) besitzt, die das Wasser zu den Hydromassageöffnungen verteilen.

5. Ventil zum Entlüften des Ansaugrohres eines Ansaugkreises für Wasser in einem Hydromassagesystem gemäß Anspruch 1, **dadurch gekennzeichnet, daß** die Schnittstelle zwischen dem Ventilkörper (24) und dem Rohr (26), das das Ventil (22) mit dem Ansaugrohr (10) verbindet, im wesentlichen oberhalb des maximalen Füllpegels (H) des Wassers in der Wanne, die mit dem Hydromassagesystem verbunden ist, liegt.

6. Ventil zum Entlüften des Ansaugrohres eines Ansaugkreises für Wasser in einem Hydromassagesystem gemäß Anspruch 1, **dadurch gekennzeichnet, daß** diese Vorrichtungen zur Verhinderung, daß Wasser im Inneren des Verbindungsrohres (26) zurückfließt, im wesentlichen aus einem zweiten Verschließbauteil (38) bestehen, das ferner zu einer zweiten Wand (40) in dem unteren Teil des Ventilbauteils (24), die mit Löchern (42) zum Durchlassen der Luft in die Richtung des ersten Verschließbauteils (34) versehen ist, gehört.

7. Ventil zum Entlüften des Ansaugrohres eines Ansaugkreises für Wasser in einem Hydromassagesystem gemäß Anspruch 6, **dadurch gekennzeichnet, daß** die Membran (38a) dieses zweiten Verschließbauteils (38) unterhalb der zweiten Wand (40), die damit verbunden ist, symmetrisch in Bezug zu der Membran (34a) des ersten Verschließbauteils (34) angeordnet ist.

8. Ventil zum Entlüften des Ansaugrohres eines Ansaugkreises für Wasser in einem Hydromassagesystem gemäß Anspruch 7, **dadurch gekennzeichnet, daß** das zweite Verschließbauteil (38) auch zwei Positionen einnehmen kann, wobei eine davon einen Durchlaß von Luft durch die Löcher (42) der zweiten Wand (40) gestattet, wohingegen es in der zweiten Position mit der unteren Oberfläche dieser Wand (40) in Eingriff gelangt, um zu verhindern, daß Wasser durch diese Löcher (42) geht.

9. Ventil zum Entlüften des Ansaugrohres eines Ansaugkreises für Wasser in einem Hydromassagesystem gemäß Anspruch 8, **dadurch gekennzeichnet, daß** die Membran (38a) dieses zweiten Verschließbauteils (38) ferner mit einem im wesentlichen mittigen Vorsprung (44) versehen ist, der nach oben zeigt und zwei vergrößerte Endabschnitte besitzt, die durch einen Zentralabschnitt verbunden sind, der in einem Durchlaß der zweiten Wand (40) gleiten kann, wobei diese vergrößerten Abschnitte die jeweiligen Stopper für den Versatz dieser Membran (38a) zwischen den zwei Positionen bilden.

10. Ventil Ventil zum Entlüften des Ansaugrohres eines Ansaugkreises für Wasser in einem Hydromassagesystem gemäß Anspruch 1, **dadurch gekennzeichnet, daß** das erste Verschließbauteil (34) stationär ist und dessen Membran (34a) aus einem elastischen, leicht deformierbaren Material besteht, so daß es mit der Wand (30) durch elastische Deformation nach oben außer Eingriff gelangt, hervorgerufen durch die Luftströmung, die in den Körper (24) des Ventils (22) aufsteigt.

## Revendications

1. Soupape (22) de ventilation de l'air provenant du conduit d'admission d'un circuit d'admission d'eau dans un système d'hydromassage, comprenant :
un corps (24) qui est fixé au moyen d'un conduit de raccordement (26) au conduit d'admission d'eau (10) d'une pompe d'admission (12) dans un système d'hydromassage et comprend dans sa partie supérieure une paroi (30) pourvue de trous (32) destinés à purger l'air dans l'atmosphère et
un premier élément de fermeture (34) comprenant un diaphragme (34a) qui peut prendre de manière sélective une première position, qui correspond à l'ouverture de la soupape (22), dans laquelle il est dégagé des trous (32) de la paroi (30) et une deuxième position, correspondant à la fermeture de la soupape (22), dans laquelle il est en prise avec ladite paroi (30),
**caractérisée en ce que**
le diaphragme (34a) du premier élément de fermeture (34) prend sa première position en raison de l'action de l'eau entrant dans le conduit d'admission (10), de manière à produire un flux d'air qui passe dans ledit conduit de raccordement (26) dans le corps de soupape (24) et sa seconde position en raison de l'action de la dépression dans le corps de soupape (24) produite lorsque la pompe d'admission (12) a été amorcée, la soupape (22) comprend également des moyens (38) associés à cet élément de fermeture (34) pour empêcher l'eau de revenir dans ledit conduit de raccordement (26), en cas d'interruption du fonctionnement du système d'hydromassage et, plus particulièrement lorsque le fonctionnement de la pompe d'admission (12) est interrompu.

2. Soupape de ventilation de l'air provenant du conduit d'admission d'un circuit d'admission d'eau dans un système d'hydromassage selon la revendication 1, **caractérisée en ce que** ledit premier élément de fermeture (34) est disposé au-dessus de la paroi (30) pourvu de trous (32) pour purger l'air, et comprend une saillie façonnée (36) tournée vers le bas, dont la partie centrale peut coulisser librement à l'intérieur d'un passage de ladite paroi (30) qui s'étend vers le haut et vers le bas sous forme de deux parties agrandies qui constituent les butées du mouvement de l'élément de fermeture (34) entre ces deux positions qui correspondent à l'ouverture et à la fermeture de la soupape (22).

3. Soupape de ventilation de l'air provenant du conduit d'admission d'un circuit d'admission d'eau dans un système d'hydromassage selon la revendication 1, **caractérisée en ce que** le diaphragme (34a) du premier élément de fermeture (34) présente une forme sensiblement concave sur le côté faisant face à cette paroi (30) pourvue de trous (32) destinés à purger l'air.

4. Soupape de ventilation de l'air provenant du conduit d'admission d'un circuit d'admission d'eau dans un système d'hydromassage selon la revendication 1, **caractérisée en ce que** l'interface entre le corps de soupape (24) et le conduit (26) qui raccorde la soupape (22) au conduit d'admission (10) est sensiblement à la même hauteur que les conduits d'alimentation (18, 20) distribuant l'eau aux orifices d'hydromassage.

5. Soupape de ventilation de l'air provenant du conduit d'admission d'un circuit d'admission d'eau dans un système d'hydromassage selon la revendication 1, **caractérisée en ce que** l'interface entre le corps de soupape (24) et le conduit (26) qui raccorde la soupape (22) au conduit d'admission (10) est sensiblement au-dessus du niveau de remplissage maximum (H) de l'eau dans le bac auquel le système d'hydromassage est raccordé.

6. Soupape de ventilation de l'air provenant du conduit d'admission d'un circuit d'admission d'eau dans un système d'hydromassage selon la revendication 1, **caractérisée en ce que** ces moyens destinés à empêcher l'eau de revenir à l'intérieur du conduit de raccordement (26) sont constitués sensiblement d'un deuxième élément de fermeture (38) qui est également associé à une deuxième paroi (40) dans la partie inférieure du corps de soupape (24) qui est pourvue de trous (42) pour le passage de l'air en direction du premier élément de fermeture (34).

7. Soupape de ventilation de l'air provenant du conduit d'admission d'un circuit d'admission d'eau dans un système d'hydromassage selon la revendication 6, **caractérisée en ce que** le diaphragme (38a) de ce deuxième élément de fermeture (38) est disposé au-dessous de ladite deuxième paroi (40) à laquelle il est associé, symétriquement par rapport au diaphragme (34a) du premier élément de fermeture (34).

8. Soupape de ventilation de l'air provenant du conduit d'admission d'un circuit d'admission d'eau dans un système d'hydromassage selon la revendication 7, **caractérisée en ce que** le deuxième élément de fermeture (38) peut également prendre deux positions, dans l'une desquelles il permet le passage de l'air à travers les trous (42) de ladite deuxième paroi (40), tandis que dans la deuxième position, il se met en prise avec la surface inférieure de cette paroi (40) pour empêcher le passage de l'eau à travers ces trous (42).

9. Soupape de ventilation de l'air provenant du conduit d'admission d'un circuit d'admission d'eau dans un système d'hydromassage selon la revendication 8, **caractérisée en ce que** le diaphragme (38a) de ce deuxième élément de fermeture (38) est également pourvu d'une saillie sensiblement centrale (44) tournée vers le haut et comprend deux parties d'extrémité agrandies raccordées par une partie centrale qui peut coulisser dans un passage de ladite deuxième paroi (40), ces parties agrandies constituant les butées de déplacement de ce diaphragme (38a) entre lesdites deux positions.

10. Soupape de ventilation de l'air provenant du conduit d'admission d'un circuit d'admission d'eau dans un système d'hydromassage selon la revendication 1, **caractérisée en ce que** le premier élément de fermeture (34) est fixe et son diaphragme (34a) est constitué d'un matériau élastique facilement déformable de sorte qu'il est dégagé de la paroi (30) par déformation élastique vers le haut provoquée par le flux d'air qui apparaît dans le corps (24) de la soupape (22).
